# EUROPÄISCHE PATENTSCHRIFT

(11) **EP 2 881 609 B1**
(45) Veröffentlichungstag und Bekanntmachung des Hinweises auf die Patenterteilung: **01.11.2017**
(21) Anmeldenummer: 14003878.7
(22) Anmeldetag: 18.11.2014
(51) Int. Cl.: F16D 41/04, F16D 41/00, F16D 41/22, F16D 23/12, F16D 43/21

(54) **Vollflächenfreilauf**
Solid free wheel
Roue libre intégrale

(30) Priorität: 22.11.2013 DE 102013019649
(43) Veröffentlichungstag der Anmeldung: 10.06.2015
(73) Patentinhaber: Laudenbach Formtechnik GmbH & Co. KG, 78559 Gosheim (DE)
(72) Erfinder: von Unwerth, Thomas, 38518 Gifhorn (DE); van der Seylberg, Frank, 09126 Chemnitz (DE)
(74) Vertreter: Binner, Bernhard

(56) Entgegenhaltungen:
- DE-A1- 19 731 451
- DE-A1-102009 024 748
- GB-A- 2 168 439
- US-A- 3 306 409
- US-A- 4 712 435

## Beschreibung

Die Erfindung betrifft einen Freilauf mit einem Innenteil und einem Außenteil, welche koaxial zu einer gemeinsamen Drehachse verlaufen und relativ zueinander drehbar sind, wobei zwischen dem Innenteil und dem Außenteil Kupplungselemente vorgesehen sind, welche bei Beaufschlagung des Innenteils oder des Außenteil mit einem Drehmoment in einer Drehrichtung eine relative Drehbewegung des Innenteils zum Außenteil sperren und bei einer Beaufschlagung des Innenteils oder des Außenteils mit einem Drehmoment in entgegengesetzter Drehrichtung das jeweils andere Teil freigeben.

Freiläufe, welche auch Überhohlkupplung genannt werden, werden seit langem in der Antriebstechnik eingesetzt. Solche Freiläufe zeichnen sich dadurch aus, dass sie bei Einleitung eines Drehmomentes in einen Antriebsstrang in einer Drehrichtung dieses Drehmoment auf die Abtriebsseite übertragen. In entgegengesetzter Drehrichtung oder wenn die Drehzahl der Abtriebsseite höher ist als die antriebsseitige Drehzahl, werden die beiden Stranghälften entkoppelt, so dass kein Drehmoment mehr übertragen wird. Solche Freilaufkupplungen können als Klemmrollen-Freilauf, Klemmkörper-Freilauf oder auch als Sperrklinken-Freilauf ausgestaltet sein.

Beim Sperrklinken-Freilauf kann beispielsweise die Innenwand des etwa ringförmig ausgebildeten Außenteils mit mehreren gleichmäßig am Umfang verteilt angeordneten Sperrnuten versehen sein, in welche in entsprechender Anzahl Sperrklinken federbelastet eingreifen können. Diese Sperrklinken sind entsprechend drehbar am beispielsweise als Antriebswelle ausgestalteten Innenteil gelagert. Bei einer Drehmomentübertragung werden die Sperrklinken federbelastet nach außen gedrückt und über die radial äußere Mantelfläche des Innenteils hinaus in die Sperrnuten der Innenwand des Außenteils hinein verstellt.

In entgegengesetzter Drehrichtung werden die Sperrklinken durch die Innenwand des Außenteils nach einer entsprechenden Relativbewegung zum Innenteil wieder in ihre Ausgangslage zurückverstellt. Nachteilig bei einem solchen Sperrklinken-Freilauf ist die im "Überholbetrieb" auftretende Geräuschentwicklung. Ein solcher Sperrklinken-Freilauf ist beispielsweise aus der DE 102 34 661 A1 entnehmbar.

Des Weiteren kann dieser Druckschrift auch ein sogenannter Klemmrollen-Freilauf entnommen werden. Bei der hier dargestellten Ausführungsvariante ist das Außenteil ringförmig ausgebildet und weist eine zylindrische Innenwand auf. Innerhalb dieses Außenteils ist ein als Antriebswelle ausgestaltetes Innenteil vorgesehen, welches am Umfang mehrere Ausnehmungen aufweist. In diese Ausnehmungen sind jeweils Klemmrollen eingesetzt. Die Ausnehmungen sind derart gestaltet, dass sie mit der inneren Mantelfläche des Außenteils einen sich in Umfangsrichtung verjüngenden "Klemmschlitz" bilden. Dabei weisen die zur Innenfläche des Außenteils gerichteten Rollflächen der Ausnehmungen in einem umfänglichen Endbereich der Ausnehmung einen Abstand zur Innenfläche des Außenteils auf, welcher größer ist als der Durchmesser der jeweils aufgenommenen Klemmrolle. Im gegenüberliegenden Endbereich der Ausnehmungen ist der Abstand der Rollfläche der Ausnehmung zur Innenfläche kleiner als der Durchmesser der Klemmrolle.

Somit wird eine Klemmwirkung und somit eine Reibschlüssige Verbindung zwischen dem Innenteil und dem Außenteil über die Klemmrollen bewirkt, sobald die Klemmrollen in diesen Bereich geringeren Abstandes hinein gelangen. Um sicherzustellen, dass die Klemmrollen zur Drehmomentübertragung in diesen Bereich gelangen, sind die Klemmrollen mittels einer Axialdruckfeder in Umfangsrichtung belastet. Soll nun ein Drehmoment übertragen werden, so wird das Außenteil (oder das Innenteil) in einer entsprechende Drehrichtung angetrieben, so dass die Klemmrollen in den sich verjüngenden Spalt zwischen der Ausnehmung und der inneren Mantelfläche des Außenteils gelangen. Aufgrund der Klemmwirkung tritt nunmehr Reibschluss zwischen den Ausnehmungen und der inneren Mantelfläche des Außenteils über die Klemmrollen auf, so dass das Drehmoment auf das Außenteil übertragen wird. Der Freilauf befindet sich im "Sperrbetrieb". In entgegengesetzter Antriebsrichtung "rollen" die Klemmrollen wieder zurück in den Bereich des größeren Abstandes so, dass die Drehmomentübertragung in dieser Drehrichtung aufgehoben ist. Der Freilauf befindet sich im "Überholbetrieb".

Des Weiteren sind auch Klemmkörper-Freiläufe bekannt, bei welchen anstatt von Klemmrollen Klemmkörper eingesetzt werden (DE 691 22 096 T2). Bei dieser Art von Freilauf weist das Innenteil eine zylindrische Mantelfläche auf, wobei auch das Außenteil eine zylindrische innere Mantelfläche aufweist. Zwischen diesen beiden Mantelflächen sind sogenannte Klemmkörper angeordnet, welche in ihrem unbelasteten Zustand schräg geneigt zu einer durch die Klemmkörper hindurchgehenden Radiale verlaufen. Wird nun das Innenteil (oder das Außenteil) in entsprechender Drehrichtung mit einem Drehmoment beaufschlagt, so haben die Klemmkörper die Tendenz, sich im Spalt zwischen den beiden Mantelflächen "aufzustellen", so dass auch hier durch die Klemmkörper eine Klemmwirkung bewirkt wird. Das durch diese Klemmwirkung entstehende Reibmoment wirkt nun wiederum auf das Außenteil, so dass dieses in dieser Drehrichtung mit dem entsprechenden Drehmoment angetrieben wird. Der Freilauf befindet sich im "Sperrbetrieb". Wird das Innenteil in entgegengesetzter Richtung angetrieben oder läuft das Außenteil mit höherer Drehzahl um als das Innenteil, so werden die Klemmkörper wieder "zurückgestellt", so dass die das Innenteil und das Außenteil Bauteile entkoppelt sind. Der Freilauf befindet sich im "Überholbetrieb".

Bei diesen beiden reibschlüssigen Freiläufen, dem Klemmrollen-Freilauf und dem Klemmkörper-Freilauf, dient im "Sperrbetrieb" eine reibschlüssige Verbindung in einer Drehrichtung zur Drehmomentübertragung zwischen dem Innenteil und dem Außenteil.

Das Wirkprinzip beider Freilauftypen beruht darauf, dass die Klemmkörper bzw. die Klemmrollen auf den Kontaktflächen des Außenringes und des Innenringes bzw. Innensterns abwälzen und dabei eine Verspannung aufbauen, welche unter Ausnutzung der Reibung eine weitere Relativbewegung des Außenteils relativ zum Innenteil unterbindet. Die kinematische Voraussetzung für die Wälzbewegung ist der Kontakt zwischen gekrümmten Flächen, welche zu einer Linienberührung zwischen den Kontaktflächen führt. Die Spannungen und Deformationen in derartigen Kontakten werden in der Kontakttheorie nach Hertz umfassend beschrieben. Daraus kann abgeleitet werden, dass der Hertzsche Kontakt stets mit hohen Werkstoffbeanspruchungen verbunden ist.

Aus der hier beschriebenen grundsätzlichen Funktionsweise konventioneller Freiläufe werden bereits die beiden wesentlichen Problemstellen ersichtlich.

Durch diesen linienförmigen Kontakt werden äußerst hohe Spannungen erzeugt, welche bei hoher Belastung eines solchen Freilaufs zu Deformationen einerseits der Klemmrollen oder Klemmkörper und andererseits auch der Kontaktflächen des Innenteils oder des Außenteils führen können. Des Weiteren müssen die Klemmkörper mit speziellen Konstruktionen auch im Überholbetrieb mit den beiden Oberflächen des Innenteils und des Außenteils über eine Art Käfig federelastisch in Kontakt gehalten werden, um die entsprechende Wirkung bei Drehmomenteinleitung entfalten zu können.

Dies bedeutet, dass die Klemmrollen und auch die Klemmkörper im Überholbetrieb stets auf den entsprechenden Kontaktflächen gleiten, was zu einem unerwünschten Verschleiß führt. Da ein Verschleiß mit einer Konturänderung verbunden ist, kommt es häufig zu Funktionsstörungen. Zusätzlich erschwert der Linienkontakt eine hydrodynamische Schmierung und begünstigt damit ebenfalls den Verschleiß der Oberflächen.

Aufgrund des Hertzschen Kontaktes erreichen die Spannungen in den Werkstoffbereichen um den Kontakt häufig Werte oberhalb der Fließgrenze der verwendeten Materialien. Dies führt infolge des besonderen Spannungszustandes im Hertzschen Kontakt zwar nicht unbedingt zu plastischen Deformationen an den Kontaktflächen, begünstigt allerdings die Entstehung und Ausbreitung von mikroskopischen Gefügefehlern bis hin zum Bauteilversagen. Dieser Effekt ist allgemein unter dem Begriff der Werkstoffermüdung bekannt und begrenzt die Lebensdauer solcher konventionellen Freiläufe in Abhängigkeit von der Last und der Schalthäufigkeit.

Demgemäß liegt der Erfindung die Aufgabe zugrunde, einen Freilauf der gattungsgemäßen Art mit einem Außenteil und einem Innenteil derart zu verbessern, dass die genannte Nachteile gezielt vermieden werden und somit eine höhere Lebenddauer erreichbar ist und/oder der Einsatz von Werkstoffen geringerer Festigkeit ermöglicht wird.

Die Aufgabe wird erfindungsgemäß zusammen mit den Merkmalen des Oberbegriffes des Anspruches 1 dadurch gelöst, dass das Außenteil eine radial nach innen gerichtete, innere Konusfläche aufweist und, dass das Innenteil eine radial nach außen gerichtete, äußere Konusfläche aufweist und dass Stellmittel vorgesehen sind, durch welche im Sperrbetrieb die innere Konusfläche des Außenteils und die äußere Konusfläche des Innenteils reibschlüssig miteinander in Kontakt bringbar sind und, dass diese Stellmittel beim Übergang vom Sperrbetrieb in den Überholbetrieb in eine neutrale Stellung rückstellbar sind und der Reibkontakt zwischen den Konusflächen aufgehoben ist.

Weitere vorteilhafte Ausgestaltungen sind den weiteren Unteransprüchen zu entnehmen.

So kann gemäß Anspruch 2 vorgesehen sein, dass die äußere Konusfläche Bestandteil einer separaten Klemmscheibe, welche formschlüssig mit dem Innenteil verbindbar ist. Durch diese Ausgestaltung ist die äußere Konusfläche des Innenteils bei Bedarf austauschbar.

Weiter kann gemäß Anspruch 3 vorgesehen sein, dass das Innenteil ein Mehrkantprofil aufweist, auf welches die Klemmscheibe mit einem Mitnahmeprofil aufsteckbar ist und, dass das Mitnahmeprofil mehrere gleichmäßig am Umfang verteilt angeordnete Profilflächen aufweist, welche im Sperrbetrieb mit äußeren Profilflächen des Innenteils (25) in Wirkverbindung stehen. Durch diese Ausgestaltung ist ein auf die Klemmscheibe oder das Innenteil wirkende Antriebsdrehmoment sich zwischen diesen beiden Bauteilen übertragbar.

In weiterer Ausgestaltung zu Anspruch 3 kann gemäß Anspruch 4 vorgesehen sein, dass die Profilflächen des Mitnahmeprofils einen balligen, nach innen gerichteten gewölbten Verlauf aufweisen und, dass die äußeren Profilflächen des Mehrkantprofils eben ausgebildet sind. Durch diese Ausgestaltung wird die Klemmscheibe bei anliegendem Antriebdrehmoment zumindest minimal radial nach außen elastisch verformt, was einerseits im Sperrbetrieb zu einer Erhöhung der Reibungskräfte zwischen der äußeren Konusfläche der Klemmscheibe und der inneren Konusfläche des Außenteils führt. Andererseits findet bei Entlastung des Freilaufs eine radiale Rückverformung der Klemmscheibe statt, so dass die reibschlüssige Verbindung beim Übergang vom Sperrbetrieb in den Überholbetrieb leichter lösbar ist, da das hierzu erforderliche Lösemoment verringert wird.

Durch die Ausgestaltung nach Anspruch 5 wird das erforderliche Lösemoment weiter verringert. Hierzu kann vorgesehen sein, dass die Klemmscheibe aus einem federelastisch nachgiebigen Werkstoff besteht und/oder im Bereich ihrer Profilflächen mehrere Radialschlitze aufweist und/oder dass im Bereich der äußeren Konusfläche der Klemmscheibe mehrere radial verlaufende Trennschlitze vorgesehen sind. Durch diese Ausgestaltung wird insbesondere eine radial elastische Verformbarkeit der Klemmscheibe erreicht. Als Werkstoffe kommen hier beispielsweise Kunststoffe aber auch metallische Werkstoffe in Frage. Durch die alternativ oder zusätzlich vorgesehenen Radialschlitze und/oder Trennschlitze wird eine Verbesserung der radial elastische Verformbarkeit erreicht, was von Bedeutung sein kann, wenn die Klemmscheibe beispielweise aus einem metallischen Werkstoff hergestellt ist. Durch die Wahl der Anzahl, Größe, Formgebung und der Verteilung solcher Radialschlitze und/oder Trennschlitze ist die Klemmscheibe bezüglich ihrer radialen Verformbarkeit den jeweiligen Einsatzbedingungen des Freilaufs bezüglich seines "Schaltverhaltens" anpassbar.

Zum Erreichen eines optimierten Reibschlusses zwischen der inneren Konusfläche des Außenteils und der äußeren Konusfläche der Klemmscheibe ist die Merkmalskombination nach Anspruch 6 vorgesehen. Danach kann dass die Klemmscheibe innenseitig eine umlaufende, V-förmig ausgebildete Stellnut aufweisen, in welche ein V-förmig ausgebildeter Ringsteg eines Stellringes eingreift, wobei der Stellring als eines der Stellmittel im Sperrbetrieb axial in die Stellnut pressbar ist, wodurch eine Verstellung der Klemmscheibe mit ihrer äußeren Konusfläche gegen die innere Konusfläche des Außenteils bewirkbar ist. Auf Grund der V-förmigen Ausbildung der Stellnut und des Ringsteges werden bei der Axialerstellung des Stellringes gegen die Klemmscheibe sowohl Axialkräfte als auch nach außen auf einen durch die Stellnut gebildeten äußeren Wandbereich der Klemmscheibe wirkende Radialkräfte wirksam, was zu einer Erhöhung des Reibschlusses zwischen der äußeren Konusfläche in diesem Wandbereich der Klemmscheibe und der inneren Konusfläche des Außenteils führt. Da der Stellring im Sperrbetrieb mit seinem V-förmigen Ringsteg in die V-förmige Stellnut der Klemmscheibe hinein gepresst wird, entsteht zwischen dem Ringsteg und der Stellnut der Klemmscheibe eine drehfeste Reibschlussverbindung. Somit kommt dem Stellring eine Doppelfunktion zu. Zum einen dient er zur Axialverstellung der Klemmscheibe zum Erreichen des Sperrbetriebes. Zum anderen ist über den Stellring auch ein zusätzliches Drehmoment auf die Klemmscheibe übertragbar.

Des Weiteren werden durch diesen Eingriff des Ringsteges in die Stellnut insbesondere im Sperrbetrieb diese beiden Bauteile gegenseitig stabilisiert, so dass eine Beschädigung dieser Bauteile auch bei hohen auf den Ringsteg des Stellringes wirkenden axialen Stellkräften ausgeschlossen wird.

Weiter kann gemäß Anspruch 7 vorgesehen sein, dass der Ringsteg des Stellrings auf seiner der Stellnut gegenüber liegenden Seite mehrere gleichmäßig am Umfang verteilt angeordnete, axial vorstehende Stellrampen aufweist, welche zur Axialverstellung des Stellringes mit Rampenelemente des Außenteils zum Erreichen der Sperrbetriebes in Wirkverbindung bringbar sind. Die Stellrampen bewirken im Zusammenwirken mit den Rampenelementen beim Übergang vom Überholbetrieb in den Sperrbetrieb die erforderliche Axialverstellung der Klemmscheibe gegen die innere Konusfläche des Außenteils. Während dieser Übergangsphase findet eine relative Drehbewegung des Außenteils zur Klemmscheibe und damit relativ zum Stellring statt, so dass der Stellring mit seinen Stellrampen an den Rampenelementen des Außenteils aufgleitet und dementsprechend eine Axialverstellung des Stellringes sicher bewirkt wird. Je nach Ausgestaltung der Stellrampen und der Rampenelemente sind äußerst große, axiale Stellkräfte bewirkbar.

Weiter kann hierzu gemäß Anspruch 8 vorgesehen sein, dass die Rampenelemente Bestandteil einer Rampenscheibe sind, welche in das Außenteil auf einen ringförmig umlaufenden Lagersitz einer abgesetzten Durchgangsbohrung des Außenteils aufsetzbar ist und über radial nach außen vorstehende Haltestege drehfest mit radial nach innen vorstehenden Formschlusselementen des Lagersitzes in Eingriff steht. Durch diese Ausgestaltung sind die Rampenelement im Falle eines auftretenden Verschleißes in einfacher Weise austauschbar. Des Weiteren kann die Rampenscheibe mit ihren Rampenelementen aus einem anderen Werkstoff, beispielsweise Kunststoff, als das Außenteil hergestellt werden. Damit kann das Außenteil bezüglich der Werkstoffes unabhängig von der Rampenscheibe hergestellt werden.

Gemäß Anspruch 9 kann weiter vorgesehen sein, dass die innere Konusfläche des Außenteils Bestandteil eines separaten Konusrings ist, welcher über eine Art Bajonettverschluss oder Schnapp- , Klebe- oder Reibschweißverbindungen mit dem Außenteil koppelbar ist. Durch diese Ausgestaltung ist der Konusring bei der Wahl eines Bajonettverschlusses oder eines lösbaren Schnappverschlusses in einfacher Weise austauschbar, was im Falle eines Verschleißes ebenfalls von Vorteil ist. Auch können durch diese Ausgestaltung die Werkstoffe für den Konusring mit der inneren Konusfläche und dem Außenteil frei gewählt werden, was auch für den Einsatz von Klebeverbindungen gilt.

Schließlich kann gemäß Anspruch 10 vorgesehen sein, dass das Außenteil auf dem Innenteil über ein als Rollenlager ausgebildetes Wälzlager drehbar gelagert ist und, dass das Innenteil eine Durchgangbohrung aufweist, mit welchem das Innenteil auf eine anzutreibende Antriebswelle drehfest aufsetzbar ist. Durch diese Ausgestaltung ist der erfindungsgemäße Freilauf äußerst variabel für den drehrichtungsabhängigen Antrieb einer Vorrichtung einsetzbar, da dieser als kompakte Freilaufkupplung in einfacher Weise auf eine anzutreibende Welle aufsetzbar ist.

Nachfolgend wird anhand der Zeichnung beispielhaft eine mögliche Ausführungsvariante näher erläutert. Es zeigt:
- Fig. 1: eine perspektivische Explosionsdarstellung der Bestandteile einer möglichen Ausführungsvariante des erfindungsgemäßen Freilaufes;
- Fig. 2: eine perspektivische Schnittdarstellung des Außenteils, des Innenteils sowie der Lagerung zwischen dem Außenteil und dem Innenteil im montierten Zustand;
- Fig. 3: die Darstellung aus Fig. 2 mit dem Außenteil, der Lagerung sowie einer in das Außenteil eingesetzten Rampenscheibe ohne das Innenteil aus Fig. 2;
- Fig. 4: die Darstellung aus Fig. 3 mit einem auf die Rampenscheibe aufgesetzten Stellring, welcher sich in einer relativen Winkelstellung zur Rampenscheibe im neutralen "Überholbetrieb" befindet;
- Fig. 5: die Darstellung aus Fig. 4 mit einer auf den Stellring aufgesetzten Klemmscheibe;
- Fig. 6: die perspektivische Schnittdarstellung aus Fig. 5 mit in das Außenteil eingesetztem Konusring;
- Fig. 7: die Darstellung aus Fig. 4 mit auf die Rampenscheibe aufgesetztem Stellring, welcher sich in Fig. 7 in einer relativen Winkelstellung zur Rampenscheibe im "Sperrbetrieb" befindet;
- Fig. 8: eine perspektivische Darstellung des fertig montierten, erfindungsgemäßen Freilaufes;
- Fig. 9: eine teilweise Schnittdarstellung des montierten Freilaufs aus den vorangegangenen Zeichnungsfiguren.

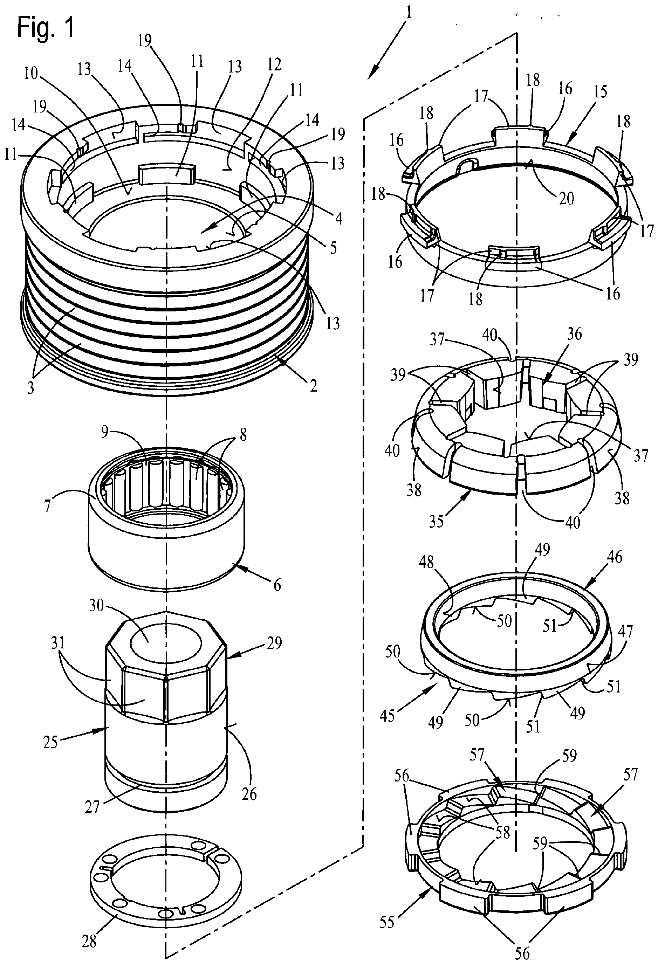

Fig. 1 zeigt eine perspektivische Explosionsdarstellung der Bestandteile einer möglichen Ausführungsvariante eines erfindungsgemäßen Freilaufs 1.

Dieser Freilauf 1 besteht bei der dargestellten Ausführungsvariante aus einem Außenteil 2, welches bei der dargestellten Ausführungsvariante als "Antriebsteil" dient und im Wesentlichen zylindrisch ausgebildet ist. Im Bereich seiner äußeren Mantelfläche weist dieses Außenteil 2 mehrere umlaufende Keilnuten auf, mit welchen das Außenteil 2 zum Zwecke des drehenden Antriebs mit einem Keilrippenriemen in Eingriff bringbar ist. Dies Ausgestaltung ist lediglich beispielhaft und ist letztendlich vom Einsatzzweck des Freilaufes 1 abhängig.

Weiter weist das Außenteil 2 eine durchgehende, radial abgestufte Durchgangsbohrung 4 auf, welche in ihrem unteren Endbereich einen zylindrischen Lagersitz 5 bildet. In diesen Lagersitz 5 ist dementsprechend ein Wälzlager 6 einsetzbar.

Dieses Wälzlager 6 ist bei der dargestellten Ausführungsvariante als Rollenlager ausgebildet und weist lediglich einen äußeren Lagerring 7 auf. Innerhalb dieses äußeren Lagerringes 7 sind mehrere Lagerrollen 8 vorgesehen, welche über einen entsprechenden Lagerkäfig 9 in der aus Fig. 1 ersichtlichen Position gehalten werden.

Weiter ist aus Fig. 1 ersichtlich, dass axial oberhalb des Lagersitzes 5 die Durchgangsbohrung 4 einen ersten, umlaufenden, ringförmigen Lagersitz 10 bildet, in dessen radial äußerem Randbereich radial nach innen gerichtete Formschlusselemente 11 vorgesehen sind.

Im oberen Endbereich des Außenteils 2 sind in der Innenwand 12 der Durchgangsbohrung 4 vertikal nach oben offene Einführungsnuten 13 vorgesehen, in welche in Umfangsrichtung jeweils ein Aufnahmeschlitz 14 mündet. Diese Einführungsnuten 13 mit ihren Aufnahmeschlitzen 14 dienen zur Bildung eines Bajonettverschlusses zur Aufnahme eines Konusringes 15, welcher zu diesem Zweck radial nach außen vorstehende Haltestege 16 aufweist. An diesen Haltestegen 16 ist jeweils ein vertikal nach oben vorstehendes Ringsegment 17 angeformt, welches mit einem radial nach außen vorstehenden Raststeg 18 versehen ist. Im fertig montierten Zustand greifen diese Raststege 18 in entsprechend im Bereich der Innenwand 12 und oberhalb der Aufnahmeschlitze 14 vorgesehene Rastnuten 19 im oberen Endbereich der Durchgangsbohrung 4 ein.

Weiter ist aus Fig. 1 unterhalb des Wälzlagers 6 ein Innenteil 25 dargestellt, welches im Bereich seines unteren Drittels eine zylindrische Mantelfläche 26 bildet. Diese zylindrische Mantelfläche 26 dient bei der dargestellten Ausführungsvariante gleichzeitig als "Lauffläche" für die Lagerrollen 8 des Wälzlagers 6.

Im unteren Endbereich dieser Mantelfläche 26 weist das Innenteil 25 eine umlaufende Aufnahmenut 27 auf, in welche ein Anschlagring 28 einsetzbar ist.

Im oberen Endbereich bildet das Innenteil 25 ein Mehrkantprofil in Form eines Achtkantprofils 29. Des Weiteren ist das Innenteil 25 bei der dargestellten Ausführungsvariante als "Hohlzylinder" ausgebildet und weist dementsprechend eine Durchgangsbohrung 30 auf. Somit ist das Innenteil 25 und damit der Freilauf 1 über dieser Durchgangsbohrung 30 mit eine drehend anzutreibende Antriebswelle drehfest in Verbindung bringbar.

Auf dieses Mehrkantprofil 29 ist eine Klemmscheibe 35 aufsetzbar, welche dementsprechend ein Mitnahmeprofil 36 aufweist. Bei der dargestellten Ausführungsvariante bildet dieses Mitnahmeprofil mehrere, ballig nach innen "gewölbte" Profilflächen 37, welche im Betrieb mit entsprechenden, eben ausgebildeten Profilflächen 31 des Mehrkantprofils 29 des Innenteils 25 in Wirkverbindung stehen.

Bei der dargestellten Ausführungsvariante der Klemmscheibe 35 bildet diese eine umlaufende, radial äußere Konusfläche 38, welche im Betrieb mit einer radial inneren Konusfläche 20 des Konusringes 15 in Wirkverbindung bringbar ist.

Bei der dargestellten Ausführungsvariante der Klemmscheibe 35 sind die Profilflächen 37 durch Radialschlitze 39 voneinander getrennt. Ebenfalls sind im Bereich der äußeren Konusfläche 38 radial von außen nach innen verlaufende Trennschlitze 40 vorgesehen, so dass die Klemmscheibe 35 eine gewisse elastische Verformbarkeit aufweist. Diese Verformbarkeit dient im Betrieb zur Reduzierung des erforderlichen Lösemomentes zum Lösen der reibschlüssigen Drehmomentverbindung zwischen der äußeren Konusfläche 38 der Klemmscheibe 35 und der inneren Konusfläche 20 des Konusrings 15. Die Radialschlitze 39 und die Trennschlitze 40 müssen jedoch nicht zwingend vorgesehen sein.

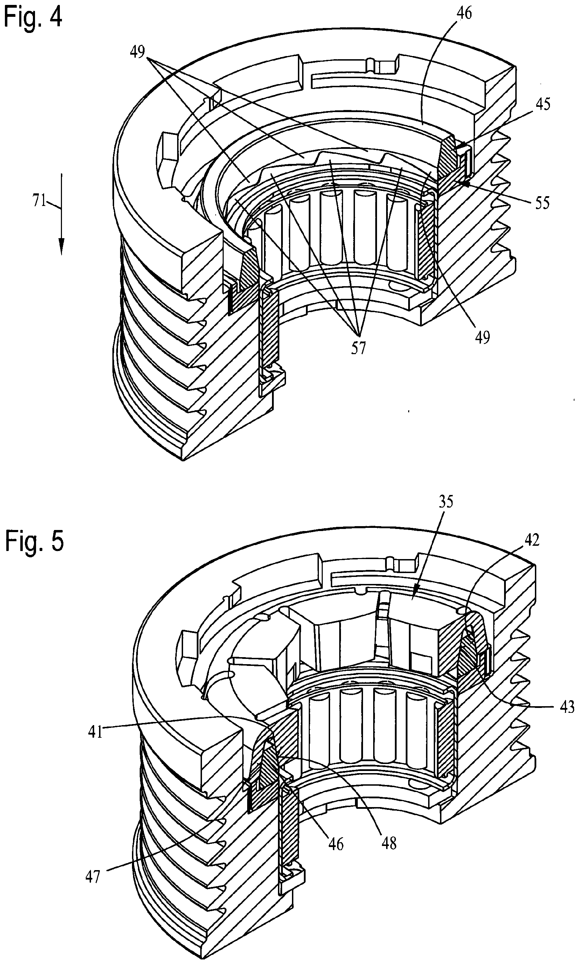

Unterhalb der Klemmscheibe 35 ist in Fig. 1 ein Stellring 45 dargestellt, welcher einen nach oben gerichteten Ringsteg 46 aufweist. Dieser Ringsteg 46 weist eine konische äußere Wirkfläche 47 auf sowie eine innere, ebenfalls konisch verlaufende Innenfläche 48. Im Betrieb greift der Stellring 45 mit seinem Ringsteg 46 in eine aus Fig. 5 erkennbare nach unten offene und V-förmig ausgebildete Stellnut 41 der Klemmscheibe 35 ein.

Des Weiteren ist aus Fig. 1 erkennbar, dass der Stellring 45 unterseitig an seinem Ringsteg 46 mit mehreren Stellrampen 49 versehen ist, welche jeweils eine schräg zur Ebene des Stellrings 45 verlaufende Stellfläche 50 aufweisen. Aufgrund dieser in Umfangsrichtung "sägezahnartige" Aneinanderreihung dieser Stellrampen 49 bilden diese in ihrem Verbindungsbereich jeweils einen Anschlag 51.

Im Betrieb ist diesem Stellring 45 eine Rampenscheibe 55 zugeordnet, welche ebenfalls ringförmig ausgebildet und in ihrem Umfangsbereich mit radial vorstehenden Haltestegen 56 versehen ist. Mit diesen Haltestegen 56 ist die Rampenscheibe 55 zwischen die Formschlusselemente 11 des Außenteils 2 bzw. der Innenwand 12 des Außenteils 2 unverdrehbar einsetzbar. Dabei liegt die Rampenscheibe 55 im montierten Zustand auf dem umlaufenden, ringförmigen Lagersitz 10 des Außenteils 2 auf.

Des Weiteren ist aus Fig. 1 erkennbar, dass die Rampenscheibe 55 umlaufend, innerhalb ihrer Haltestege 56 mehrere Rampenelemente 57 aufweist, welche jeweils eine in Umfangsrichtung schräg zur Ebene der Rampenscheibe 55 geneigt verlaufende Rampenfläche 58 bilden. Aufgrund der "sägezahnartigen" Aneinanderreihung dieser Rampenelemente 57 bilden auch diese in ihrem Übergangsbereich Anschlagelemente 59, welche im Betrieb mit den Anschlägen 51 der Stellrampen 49 des Stellringes 45 in Wirkverbindung bringbar sind.

Die Anzahl und Formgebung der Rampenelemente 57 der Rampenscheibe 55 entspricht dabei der Anzahl und Formgebung der Stellrampen 59 des Stellringes 45.

Es ist leicht vorstellbar, dass bei einer Relativdrehung des Stellringes 45 zur Rampenscheibe 55 aus einer neutralen Ausgangsstellung die Stellrampen 49 mit ihren jeweiligen Stellflächen 50 auf den Rampenflächen 58 der Rampenelemente 57 aufgleiten, so dass hierdurch eine Stellbewegung in Richtung des Pfeiles 65 bewirkbar ist.

In den nachfolgenden Zeichnungsfiguren wird der "Zusammenbau" sowie die Funktionsweise des Freilaufes 1 näher erläutert.

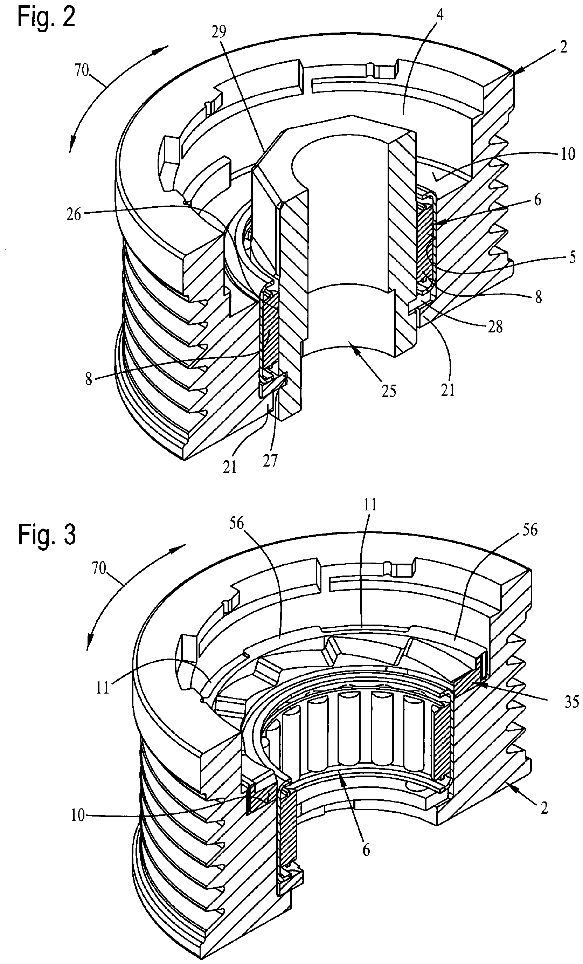

Fig. 2 zeigt eine perspektivische Schnittdarstellung des Außenteils 2 zusammen mit dem Innenteil 25, dem Anschlagring 28 sowie dem Wälzlager 6. Es ist erkennbar, dass das Wälzlager 6 in den Lagersitz 5 des Außenteils 2 feststehend eingesetzt ist. Der Lagersitz 5 weist in seinem unteren Endbereich einen radial nach innen vorstehenden, umlaufenden Anschlagsteg 21 auf, an welchem sich der Anschlagring 28 axial abstützt. Der Anschlagring 28 ist dabei in die umlaufende Aufnahmenut 27 des Innenteils 25 eingesetzt. Anstatt eines solchen abnehmbaren Anschlagringes 28 kann das Innenteil 25 auch mit einem einstückig angeformten, umlaufenden Ringsteg versehen sein (in der Zeichnung nicht dargestellt).

Weiter ist aus Fig. 2 erkennbar, dass das Innenteil 25 mit seiner zylindrischen Mantelfläche 26 mit den Lagerrollen 8 in Verbindung steht und somit das Innenteil 25 in Richtung des Doppelpfeils 70 relativ zum Außenteil 2 drehbar aufgenommen ist. Weiter ist aus Fig. 2 ersichtlich, dass das Innenteil 25 das Wälzlager 6 mit seinem Mehrkantprofil 29 vertikal nach oben überragt.

Nach der Montage des Innenteils 25 mit seinem Anschlagring 28 sowie des Wälzlagers 6 im Außenteil 2, wie zu Fig. 2 beschrieben, wird nun auf den Lagersitz 10 der Durchgangsbohrung 4 die Rampenscheibe 55 aufgesetzt, wie dies aus Fig. 3 ersichtlich ist. Dabei wurde in Fig. 3 auf die Darstellung des Innenteils 25 der Übersichtlichkeit halber verzichtet.

Die Rampenscheibe 55 liegt, wie dies aus Fig. 3 ersichtlich ist, oberseitig auf dem Lagersitz 10 flächig auf und umschließt dabei das Wälzlager 6. Weiter steht die Rampenscheibe 55 mit ihren Haltestegen 56 mit den radial nach innen vorstehenden Formschlusselementen 11 des Außenteils 2 unverdrehbar in Eingriff. Dies bedeutet wiederum, dass bei einer Stellbewegung des Außenteils 2 in Richtung des Doppelpfeils 70 die Rampenscheibe 55 zwangsläufig mitgedreht wird. Dabei führt die Rampenscheibe 55 dementsprechend eine drehende Relativbewegung zum aus Fig. 2 erkennbaren Innenteil 25 aus.

Nachdem die Rampenscheibe 55 auf den Lagersitz 10 aufgesetzt ist, kann auf die Rampenscheibe 55 der Stellring 45 aufgesetzt werden, wie dies aus Fig. 4 ersichtlich ist. In Fig. 4 ist dabei der Stellring 45 bezüglich seiner Winkelstellung im Bezug auf die Winkelstellung der Rampenscheibe 55 in seiner neutralen "Stellung" dargestellt, in welcher sich der Freilauf 1 im "Überholbetrieb" befindet. Es ist erkennbar, dass die Stellrampen 49 des Stellringes 45 passend formschlüssig mit den Rampenelementen 57 der Rampenscheibe 55 in Eingriff stehen. In dieser "neutralen" Winkelstellung des Stellringes 45 zur Rampenscheibe 55 ist der Stellring 45 in Richtung des Pfeiles 71 "nach unten" verstellt.

Nachdem der Stellring 45 in der in Fig. 4 dargestellten Art und Weise auf die Rampenscheibe 55 aufgesetzt ist, kann auf den vertikal nach oben vorstehenden Ringsteg 46 die Klemmscheibe 35 aufgesetzt werden, wie dies aus Fig. 5 erkennbar ist. Aus Fig. 5 ist weiter ersichtlich, dass die Klemmscheibe 35 zum Aufsetzen auf den Ringsteg 46 unterseitig die V-förmig ausgebildete Stellnut 41 aufweist. Diese Stellnut 41 bildet eine äußere, konische Stellfläche 42 und dieser radial gegenüber liegend eine innere, ebenfalls konisch ausgebildete Innenfläche 43, welche entsprechend mit der radial äußeren, konischen Außenfläche 47 und der radial innen liegenden Innenfläche 48 des Ringsteges 46 des Stellringes 45 in Wirkverbindung bringbar sind.

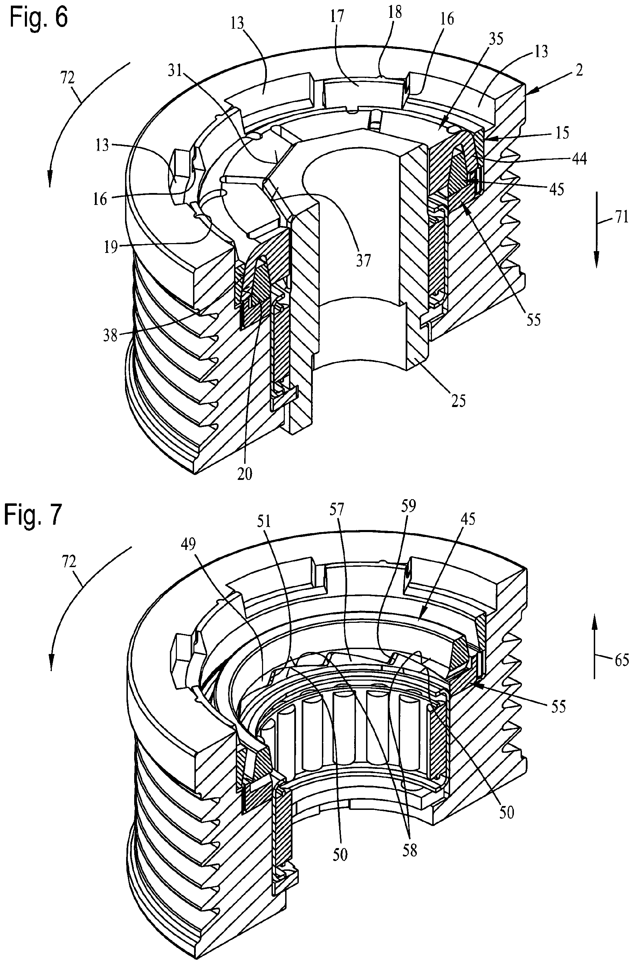

Nachdem die Klemmscheibe 35 auf den Stellring 45 aufgesetzt ist, kann als letzter Montageschritt der Konusring 15 in das Außenteil 2 eingesetzt werden, wie dies aus Fig. 6 ersichtlich ist. Dabei werden zum Einsetzen des Konusringes 15 zunächst die gleichmäßig am Umfang verteilt angeordneten radialen Haltestege 16 auf die Einführungsnuten 13 ausgerichtet und der Konusring 15 in vertikaler Richtung des Pfeiles 71 in die zylindrische Innenwand 12 des Außenteils 2 eingesetzt. Nach einer relativen Drehung des Konusringes 15 in Richtung des Pfeiles 72 gelangen die Haltestege 16 mit den in Fig. 6 nicht erkennbaren Aufnahmeschlitzen 14 (Fig. 1) des Außenteils 2 in Eingriff.

Diesen fertig montierten Zustand zeigt Fig. 6. Dabei ist aus Fig. 6 erkennbar, dass die radial vorstehenden Raststege 18 der vertikal nach oben gerichteten Ringsegmente 17, jeweils mit einer der Rastnuten 19 des Außenteils 2 rastend in Eingriff stehen. Damit wird ein unbeabsichtigtes Zurückdrehen des Konusringes 15 entgegen des Pfeiles 72 relativ zum Außenteil 2 sicher verhindert.

Wird nunmehr das Außenteil 2 entgegen des Pfeiles 72 zum Zwecke des Antriebes verstellt, so führt die drehfest im Außenteil 2 angeordnete Rampenscheibe 55 eine drehende Relativbewegung zum Stellring 45 aus. Bei dieser Stellbewegung gleiten die Stellflächen 50 des Stellringes 45 entlang der Rampenflächen 58 der Rampenscheibe 55 auf, so dass der Stellring 45 eine Stellbewegung in Richtung des Pfeiles 65 ausführt, wie dies aus Fig. 7 erkennbar ist.

Es ist leicht vorstellbar, dass bei dieser axialen Stellbewegung in Richtung des Pfeiles 65 der Stellring 45 mit seinem Ringsteg 46 in die Stellnut 41 der Klemmscheibe 35 hinein gepresst wird. Die Klemmscheibe 35 führt dementsprechend eine Axialbewegung in Richtung des Pfeils 65 und gelangt mit ihrer äußeren Konusfläche 38 mit der inneren, konischen Konusfläche 20 des Konusringes 15 in reibschlüssige Verbindung. Aufgrund der durch die Stellrampe 49 und die zugeordneten Rampenelemente 57 bewirkte Stellkraft, welche mit zunehmendem Drehmoment ansteigt, werden somit Axialdruckkräfte in Richtung des Pfeiles 65 auf die Klemmscheibe 35 übertragen. Aufgrund der V-förmigen Ausgestaltung des Ringsteges 46 des Stellringes 45 und dessen Eingriff mit der V-förmigen Stellnut 41, werden zusätzlich radiale Stellkräfte auf den äußeren Wandbereich 44 der Klemmscheibe 35 (Fig. 6) bewirkt, wodurch die Reibungskräfte zwischen der Konusfläche 20 des Konusringes 15 und der äußeren Konusfläche 38 der Klemmscheibe 35 vergrößert werden.

Aufgrund der Tatsache, dass hier eine großflächige Anlage der äußeren Konusfläche 38 der Klemmscheibe 35 an der inneren Konusfläche 20 des Stellringes 45 bewirkt wird, ist eine Beschädigung sowohl der Klemmscheibe 35 als auch des Konusringes 15 sicher ausgeschlossen.

Des Weiteren ist aus Fig. 6 erkennbar, dass die Klemmscheibe 35 mit ihren inneren Profilflächen 37 mit den äußeren Profilflächen 31 des Mehrkantprofils 29 des Innenteils 25 formschlüssig in Eingriff steht.

Durch die ballig nach innen gewölbte Ausbildung der inneren Profilflächen 37 des Mitnahmeprofils 36 der Klemmscheibe 35 werden bei Einwirken eines Antriebsmoments auf die Klemmscheibe 35 über die äußeren Profilflächen 31 des Innenteils 25 radial nach außen wirkende Kräfte erzeugt, welche eine radial elastische Verformung der Klemmscheibe 35 bewirken. Durch diese elastische Verformung werden die Reibungskräfte zwischen der Klemmscheibe 35 und dem Konusring 15 verstärkt. Des Weiteren wird durch diese Ausgestaltung das Lösemoment beim Wechsel vom "Sperrbetrieb" in den "Überholbetrieb" verringert, da bei Wegfall des wirksamen Antriebsdrehmomentes auch die Radialkräfte entfallen und somit eine radial elastische "Rückverformung" der Klemmscheibe erfolgt und somit der Reibschluss zwischen der Klemmscheibe 35 und Konusring erheblich verringert wird.

Durch die in Fig. 1 beschriebenen Radialschlitze 39 sowie die Trennschlitze 40 wird diese Wirkung der Radialkräfte verstärkt, so dass durch die Ausgestaltung der Radialaschlitze 39 und die der Trennschlitze 40 insbesondere die Größe des Lösemoments beeinflussbar bzw. einstellbar ist.

Mit Erreichen des "Überholbetriebes" und die damit verbundene drehende Relativbewegung des Innenteils 25 mit der Klemmscheibe 35 relativ zum Außenteil 2 mit dem Konusring 15 bewegt sich gleichzeitig der Stellring 45 wieder in Richtung des Pfeiles 71 aus der zu Fig. 7 dargestellten aktiven Stellung in die zu Fig. 4 dargestellte neutrale Stellung zurück. Damit ist der Reibschluss aufgehoben.

Diese Radialschlitze 39 und Trennschlitze 40 müssen jedoch nicht zwingend vorgesehen sein. Dadurch erhöht sich lediglich das Lösemoment zum Lösen des Freilaufes, was bei verschiedenen Anwendungen nicht störend ist.

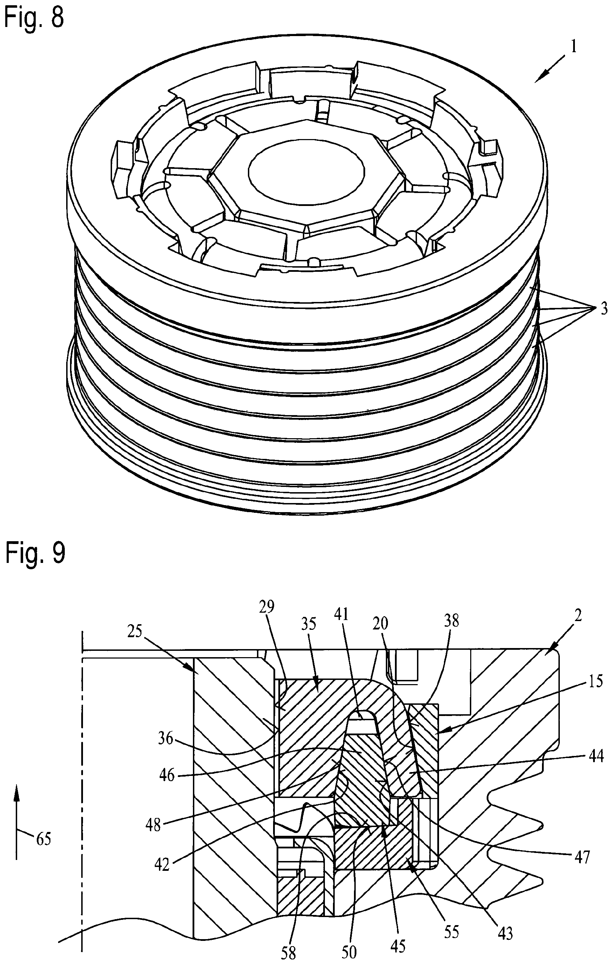

Fig. 8 zeigt der Vollständigkeit halber den Freilauf 1 nochmals in seinem vollständig montierten Zustand in perspektivischer Darstellung. Es ist erkennbar, dass der erfindungsgemäße Freilauf 1 ein äußerst kompaktes Bauteil bildet. Dabei sei angemerkt, dass das Außenteil 2 auch in anderer Weise ausgestaltet sein kann, insbesondere was deren Keilnuten 3 betrifft. Hier können im Außenumfang auch Verzahnungen und dergleichen mehr vorgesehen sein, was letztendlich vom konkreten Anwendungsfall abhängig ist.

In der vergrößerten Schnittdarstellung der Fig. 9 wird die Funktionsweise des erfindungsgemäßen Freilaufes 1 nochmals kurz dargestellt. Dabei zeigt Fig. 9 einen teilweisen Schnitt der rechten Hälfte des zusammengebauten Zustandes des gesamten Freilaufes 1, entsprechend der perspektivischen Schnittdarstellung aus Fig. 6.

Wie aus Fig. 9 ersichtlich ist, greift das Innenteil 25 mit seinem Mehrkantprofil 29 in das Mitnahmeprofil 36 der Klemmscheibe 35 ein, wobei im in Fig. 9 dargestellten entlasteten Zustand, das Mehrkantprofil 29 zum Mitnahmeprofil 36 im unbelasteten Zustand des Freilaufs 1 oder im "Überholbetrieb" mit Spiel aufgenommen sein kann.

Der Konusring 15 ist feststehend in das Außenteil 2 eingesetzt und weist mit seiner Konusfläche 20 einen zumindest geringen axialen und radialen Abstand zur äußeren Konusfläche 38 der Klemmscheibe 35 auf. In der dargestellten entlasteten Stellung, wird der Stellring 45 mit seinem V-förmigen Ringsteg 46 in der V-förmigen Stellnut 41 der Klemmscheibe 35 aufgenommen. Dabei können die Innenfläche 43 zur konischen Wirkfläche 47 und die äußere Stellfläche 42 zur konischen Innenfläche 48 ebenfalls ein axiales und radiales geringes Spiel aufweisen.

Wird nun beispielsweise das Außenteil 2 entgegen des Pfeiles 72 aus den Fig. 6 und 7 mit einem Drehmoment beaufschlagt, so gleitet der Stellring 45 mit seinen "unteren" Stellflächen 50 entlang der Rampenflächen 58 der Rampenscheibe 55 auf und bewegt sich in Richtung des Pfeiles 65. Es ist leicht erkennbar, dass diese Stellbewegung in Richtung des Pfeiles 65 einerseits eine Stellbewegung der Klemmscheibe 35 in dieselbe Richtung bewirkt und andererseits auch eine Keilwirkung auf den äußeren Wandbereich 44 der Klemmscheibe 35 bewirkt wird. Dadurch kommen die innere Konusfläche 20 des Konusringes 15 und die äußere Konusfläche 38 der Klemmscheibe 35 in Kontakt, so dass sich hier eine reibschlüssige Verbindung ergibt. Auf Grund der V-förmigen Ausgestaltungen der Stellnut 41 und des Ringsteges 46 wird der Wandbereich 44 der Klemmscheibe 35 mit seiner äußeren Konusfläche 38 auch elastisch nachgiebig, radial nach außen gegen die innere Konusfläche 20 des Konusrings 15 gedrückt, so dass der Reibschluss verbessert wird. Damit wird die Klemmscheibe 35 aufgrund dieses Reibschlusses in dieselbe Drehrichtung entgegen des Pfeiles 72 aus den Fig. 6 und 7 mitgedreht. Aufgrund des Formschlusses zwischen dem Mehrkantprofil 29 des Innenteils 25 und dem Mitnahmeprofil 36 der Klemmscheibe 35 wird somit in diesem "Sperrbetrieb" das Innenteil 25 zwangsläufig mitgenommen.

Da der Stellring 45 in diesem Sperrbetrieb mit seinem V-förmigen Ringsteg 46 in die V-förmige Stellnut 41 der Klemmscheibe hinein gepresst wird, entsteht zwischen der äußeren Wirkfläche 47 des Ringsteges 46 und der konischen Innenfläche 43 der Stellnut 41 sowie zwischen der konischen Innenfläche 48 und der äußeren Stellfläche 42 der Stellnut 41 eine drehfeste Reibschlussverbindung zwischen der Klemmscheibe 35 und dem Stellring 45. Der Stellring 45 steht im Sperrbetrieb wiederum über die in Fig. 1 erkennbaren Stellrampen 49 mit den Rampenelementen 57 der Rampenscheibe drehfest in Verbindung, so dass über den Stellring 45 bzw. dessen Ringsteg 46 ein zusätzlichen Drehmoment auf die Klemmscheibe 35 übertragbar ist. Somit kommt dem Stellring 45 bei der dargestellten Ausführungsvariante eine Doppelfunktion zu. Zum einen dient er zur Axialverstellung der Klemmscheibe 35 zum Erreichen des Sperrbetriebes. Zum anderen ist über den Stellring 45 auch ein zusätzliches Drehmoment auf die Klemmscheibe 35 übertragbar.

Wird nun das Außenteil 2 entlastet oder gar in Richtung des Pfeiles 72 aus den Fig. 6 und 7 angetrieben, so befindet sich der Freilauf 1 im sogenannten "Überholbetrieb". Da, wie dies insbesondere aus Fig. 7 ersichtlich ist, bei einer entsprechenden Relativbewegung des Außenteils 2 in Richtung des Pfeiles 72 relativ zum Innenteil 25 die Anschläge 51 der Stellrampen 49 mit den Anschlagelementen 59 der Rampenelemente 57 in Kontakt gelangen, führt der Stellring 45 eine relative Drehbewegung zur Klemmscheibe 35 aus.

Aufgrund der konischen Ausbildung der Stellnut 41 der Klemmscheibe 35 und des Ringsteges 46 des Stellringes 45, wird der Stellring 45 entgegen des Pfeiles 65 "nach unten" bewegt. Gleichzeitig führt dies jedoch auch dazu, dass der äußere Wandbereich 44 "entlastet" wird und sich leicht radial nach innen bewegt. Gleichzeitig führt dies wiederum zur Aufhebung des Reibschlusses zwischen der inneren Konusfläche 20 des Konusringes 15 und der äußeren Konusfläche 38 der Klemmscheibe 35. Damit ist die Drehmomentverbindung zwischen dem Außenteil 2 und dem Innenteil 25 sicher aufgehoben.

Um das Schließen des Freilaufs 1 für den erneuten Sperrbetrieb zu verbessern, kann der Stellring 45 auch eine von einer kreisrunden Formgebung leicht abgewandelte Formgebung aufweisen, so dass eine Mitnahme bei einer relativen Drehbewegung des Außenteils 2 entgegen des Pfeiles 72 aus den Fig. 6 und 7 relativ zum Innenteil 25 sicher eine Mitnahme des Stellringes 45 bewirkt.

Durch die erfindungsgemäße Ausgestaltung können insbesondere der Konusring 15, die Klemmscheibe 35, der Stellring 45 und die Rampenscheibe 55 aus Kunststoff kostengünstig hergestellt werden, wobei eine hohe Lebensdauer gewährleistet ist. Je nach Anwendungsfall können das Außenteil 2 und das Innenteil 25 aus einem metallischen Werkstoff hergestellt sein.

Auch können der Konusring 15 und das Außenteil 2 einstückig ausgebildet sein. Desgleichen können auch die Rampenscheibe 55 und das Außenteil 2 einstückig ausgebildet sein.

## Patentansprüche

1. Freilauf mit einem Innenteil (25) und einem Außenteil (2), welche koaxial zu einer gemeinsamen Drehachse verlaufen und relativ zueinander drehbar sind, wobei zwischen dem Innenteil (25) und dem Außenteil (2) Kupplungselemente (15, 35) vorgesehen sind, welche im Sperrbetrieb bei Beaufschlagung des Innenteils (25) oder des Außenteil (2) mit einem Drehmoment in einer Drehrichtung eine relative Drehbewegung des Innenteils (25) zum Außenteil (2) sperren und im Überholbetrieb bei einer Beaufschlagung des Innenteils (25) oder des Außenteils (2) mit einem Drehmoment in entgegengesetzter Drehrichtung das jeweils andere Teil (25 bzw. 2) freigeben,
**dadurch gekennzeichnet,**
**dass** das Außenteil (2) eine radial nach innen gerichtete, innere Konusfläche (20) aufweist und,
**dass** das Innenteil (25) eine radial nach außen gerichtete, äußere Konusfläche (38) aufweist, und
**dass** Stellmittel (45, 55) vorgesehen sind, durch welche im Sperrbetrieb die innere Konusfläche (20) des Außenteils (2) und die äußere Konusfläche (38) des Innenteils reibschlüssig miteinander in Kontakt bringbar sind, und
**dass** diese Stellmittel (45, 55) beim Übergang vom Sperrbetrieb in den Überholbetrieb in eine neutrale Stellung rückstellbar sind und der Reibkontakt zwischen den Konusflächen (20, 38) aufgehoben ist.

2. Freilauf nach Anspruch 1, **dadurch gekennzeichnet, dass** die äußere Konusfläche (38) Bestandteil einer separaten Klemmscheibe (35) ist, welche formschlüssig mit dem Innenteil (25) verbindbar ist.

3. Freilauf nach Anspruch 2, **dadurch gekennzeichnet, dass** das Innenteil (25) ein Mehrkantprofil (29) aufweist, auf welches die Klemmscheibe (35) mit einem Mitnahmeprofil (36) aufsteckbar ist, und
dass das Mitnahmeprofil (36) mehrere gleichmäßig am Umfang verteilt angeordnete Profilflächen (37) aufweist, welche im Sperrbetrieb mit äußeren Profilflächen (31) des Innenteils (25) in Wirkverbindung stehen.

4. Freilauf nach Anspruch 3, **dadurch gekennzeichnet, dass** die Profilflächen (37) des Mitnahmeprofils (36) einen balligen, nach innen gerichteten gewölbten Verlauf aufweisen, und
dass die äußeren Profilflächen (31) des Mehrkantprofils (29) eben ausgebildet sind.

5. Freilauf nach Anspruch 3 oder 4, **dadurch gekennzeichnet, dass** die Klemmscheibe (35) aus einem federelastisch nachgiebigen Werkstoff besteht und/oder im Bereich ihrer Profilflächen (37) mehrere Radialschlitze (39) aufweist und/oder dass im Bereich der äußeren Konusfläche (38) der Klemmscheibe (35) mehrere radial verlaufende Trennschlitze (40) vorgesehen sind.

6. Freilauf nach einem der Ansprüche 2 bis 5, **dadurch gekennzeichnet, dass** die Klemmscheibe (35) innenseitig eine umlaufende, V-förmig ausgebildete Stellnut (41) aufweist, in welche ein V-förmig ausgebildeter Ringsteg (46) eines Stellringes (45) eingreift, und
dass der Stellring (45) als eines der Stellmittel im Sperrbetrieb axial in die Stellnut (41) pressbar ist, wodurch eine Verstellung der Klemmscheibe (35) mit ihrer äußeren Konusfläche (38) gegen die innere Konusfläche (20) des Außenteils (2) bewirkbar ist.

7. Freilauf nach Anspruch 6, **dadurch gekennzeichnete, dass** der Ringsteg (46) des Stellrings (45) auf seiner der Stellnut (41) gegenüber liegenden Seite mehrere gleichmäßig am Umfang verteilt angeordnete, axial vorstehende Stellrampen (49) aufweist, welche zur Axialverstellung des Stellringes (45) mit Rampenelementen (57) des Außenteils (2) zum Erreichen des Sperrbetriebes in Wirkverbindung bringbar sind.

8. Freilauf nach Anspruch 7, **dadurch gekennzeichnet, dass** die Rampenelemente (57) Bestandteil einer Rampenscheibe (55) sind, welche in das Außenteil (2) auf einen ringförmig umlaufenden Lagersitz (10) einer abgesetzten Durchgangsbohrung (4) des Außenteils (2) aufsetzbar ist und über radial nach außen vorstehende Haltestege (56) drehfest mit radial nach innen vorstehenden Formschlusselementen (11) des Lagersitzes (10) in Eingriff steht.

9. Freilauf nach einem der Ansprüche 1 bis 8, **dadurch gekennzeichnet, dass** die innere Konusfläche (20) des Außenteils (2) Bestandteil eines separaten Konusrings (15) ist, welcher über eine Art Bajonettverschluss (13, 14, 16) oder Schnapp- , Klebe- oder Reibschweißverbindungen mit dem Außenteil (2) koppelbar ist.

10. Freilauf nach einem der Ansprüche 1 bis 9, **dadurch gekennzeichnet, dass** das Außenteil (2) auf dem Innenteil (25) über ein als Rollenlager ausgebildetes Wälzlager (6) drehbar gelagert ist, und
dass das Innenteil (25) eine Durchgangbohrung 30 aufweist, mit welchem das Innenteil (25) auf eine anzutreibende Antriebswelle drehfest aufsetzbar ist.

## Claims

1. Freewheel having an inner part (25) and an outer part (2) which run coaxially with respect to a common rotational axis and can be rotated relative to one another, clutch elements (15, 35) being provided between the inner part (25) and the outer part (2), which clutch elements (15, 35), during locking operation, lock a relative rotational movement of the inner part (25) with respect to the outer part (2) if the inner part (25) or the outer part (2) is loaded with a torque in a rotational direction, and, during overrun operation, release the respective other part (25 or 2) if the inner part (25) or the outer part (2) are loaded with a torque in the opposite rotational direction, **characterized in that** the outer part (2) has a radially inwardly directed, inner cone face (20), and **in that** the inner part (25) has a radially outwardly directed, outer cone face (38), and **in that** actuating means (45, 55) are provided, by way of which, during locking operation, the inner cone face (20) of the outer part (2) and the outer cone face (38) of the inner part can be brought into contact with one another in a frictionally locking manner, and **in that**, during the transition from the locking operation into the overrun operation, the said actuating means (45, 55) can be reset into a neutral position and the frictional contact between the cone faces (20, 38) is cancelled.

2. Freewheel according to Claim 1, **characterized in that** the outer cone face (38) is a constituent part of a separate clamping plate (35) which can be connected to the inner part (25) in a positively locking manner.

3. Freewheel according to Claim 2, **characterized in that** the inner part (25) has a polygonal profile (29), onto which the clamping plate (35) can be plugged by way of a driving profile (36), and **in that** the driving profile (36) has a plurality of profile faces (37) which are arranged distributed uniformly on the circumference and, during locking operation, are operatively connected to outer profile faces (31) of the inner part (25).

4. Freewheel according to Claim 3, **characterized in that** the profile faces (37) of the driving profile (36) have a crowned, inwardly directed, curved profile, and **in that** the outer profile faces (31) of the polygonal profile (29) are of planar configuration.

5. Freewheel according to Claim 3 or 4, **characterized in that** the clamping plate (35) consists of a resiliently compliant material and/or has a plurality of radial slots (39) in the region of its profile faces (37), and/or **in that** a plurality of radially running separating slots (40) are arranged in the region of the outer cone face (38) of the clamping plate (35).

6. Freewheel according to one of Claims 2 to 5, **characterized in that**, on the inner side, the clamping plate (35) has a circumferential actuating groove (41) of V-shaped configuration, into which actuating groove (41) an annular web (46) of V-shaped configuration of an actuating ring (45) engages, and **in that** the actuating ring (45) can be pressed axially into the actuating groove (41) as one of the actuating means during locking operation, as a result of which an adjustment of the clamping plate (35) with its outer cone face (38) against the inner cone face (20) of the outer part (2) can be brought about.

7. Freewheel according to Claim 6, **characterized in that** the annular web (46) of the actuating ring (45) has, on its side which lies opposite the actuating groove (41), a plurality of axially projecting actuating ramps (49) which are arranged distributed uniformly on the circumference and, for the axial adjustment of the actuating ring (45), can be brought into operative connection with ramp elements (57) of the outer part (2) in order to achieve the locking operation.

8. Freewheel according to Claim 7, **characterized in that** the ramp elements (57) are a constituent part of a ramp plate (55) which can be placed into the outer part (2) onto an annularly circumferential bearing seat (10) of a recess through bore (4), and, via radially outwardly projecting holding webs (56), is in fixed engagement with radially inwardly projecting positively locking elements (11) of the bearing seat (10) so as to rotate with them.

9. Freewheel according to one of Claims 1 to 8, **characterized in that** the inner cone face (20) of the outer part (2) is a constituent part of a separate cone ring (15) which can be coupled to the outer part (2) via a type of bayonet closure (13, 14, 16) or snapaction, adhesively bonded or rotary friction welded connections.

10. Freewheel according to one of Claims 1 to 9, **characterized in that** the outer part (2) is mounted rotatably on the inner part (25) via an anti-friction bearing (6) which is configured as a roller bearing, and **in that** the inner part (25) has a through bore 30, by way of which the inner part (25) can be set fixedly onto a drive shaft to be driven so as to rotate with it.

## Revendications

1. Roue libre avec une partie intérieure (25) et une partie extérieure (2), qui sont coaxiales à un axe de rotation commun et qui peuvent tourner l'une par rapport à l'autre, dans laquelle il est prévu entre la partie intérieure (25) et la partie extérieure (2) des éléments de couplage (15, 35), qui en mode de blocage avec un couple de rotation dans un sens de rotation appliqué à la partie intérieure (25) ou à la partie extérieure (2) bloquent un mouvement de rotation relatif de la partie intérieure (25) par rapport à la partie extérieure (2) et en mode de restauration avec un couple de rotation dans le sens de rotation opposé appliqué à la partie intérieure (25) ou à la partie extérieure (2) libèrent respectivement l'autre partie (25 ou 2),
**caractérisée en ce que** la partie extérieure (2) présente une face conique intérieure (20) dirigée radialement vers l'intérieur, et **en ce que** la partie intérieure (25) présente une face conique extérieure (38) dirigée radialement vers l'extérieur, et **en ce qu'**il est prévu des moyens de réglage (45, 55), par lesquels en mode de blocage la face conique intérieure (20) de la partie extérieure (2) et la face conique extérieure (38) de la partie intérieure peuvent être mises en contact par friction l'une avec l'autre, et **en ce que** ces moyens de réglage (45, 55) peuvent être rappelés dans une position neutre lors du passage du mode de blocage au mode de restauration et le contact de friction entre les faces coniques (20, 38) est alors supprimé.

2. Roue libre selon la revendication 1, **caractérisée en ce que** la face conique extérieure (38) fait partie d'un disque de serrage séparé (35), qui peut être assemblé par emboîtement à la partie intérieure (25).

3. Roue libre selon la revendication 2, **caractérisée en ce que** la partie intérieure (25) présente un profil polygonal (29), sur lequel le disque de serrage (35) peut être engagé avec un profil d'entraînement (36), et **en ce que** le profil d'entraînement (36) présente plusieurs faces de profil (37) uniformément réparties sur la périphérie, qui en mode de blocage sont en liaison active avec des faces de profil extérieures (31) de la partie intérieure (25).

4. Roue libre selon la revendication 3, **caractérisée en ce que** les faces de profil (37) du profil d'entraînement (36) présentent une forme bombée, incurvée en direction de l'intérieur, et **en ce que** les faces de profil extérieures (31) du profil polygonal (29) sont planes.

5. Roue libre selon la revendication 3 ou 4, **caractérisée en ce que** le disque de serrage (35) se compose d'un matériau souple élastique et/ou présente plusieurs fentes radiales dans la région de ses faces de profil (37) et/ou **en ce qu'**il est prévu plusieurs fentes de séparation s'étendant radialement (40) dans la région de la face conique extérieure (38) du disque de serrage (35).

6. Roue libre selon une des revendications 2 à 5, **caractérisée en ce que** le disque de serrage (35) présente intérieurement une rainure de réglage périphérique, réalisée en forme de V, dans laquelle s'engage une nervure annulaire réalisée en forme de V (46) d'une bague de réglage (45), et **en ce que** la bague de réglage (45) peut, en mode de blocage, être pressée axialement dans la rainure de réglage (41) en tant qu'un des moyens de réglage, ce qui permet de provoquer un déplacement du disque de serrage (35) avec sa face conique extérieure (38) contre la face conique intérieure (20) de la partie extérieure (2).

7. Roue libre selon la revendication 6, **caractérisée en ce que** la nervure annulaire (46) de la bague de réglage (45) présente sur son côté situé à l'opposé de la rainure de réglage (41) plusieurs rampes de réglage axialement saillantes (49) uniformément réparties sur la périphérie, qui peuvent être mises en liaison active avec des éléments de rampes (57) de la partie extérieure (2) pour le déplacement axial de la bague de réglage (45) en vue d'atteindre le mode de blocage.

8. Roue libre selon la revendication 7, **caractérisée en ce que** les éléments de rampes (57) font partie d'un disque à rampes (55), qui peut être posé dans la partie extérieure (2) sur un siège d'appui périphérique annulaire (10) d'un alésage de passage en retrait (4) de la partie extérieure (2) et qui est en prise par des nervures de maintien radialement saillantes vers l'extérieur (56) de façon calée en rotation avec des éléments d'emboîtement radialement saillants vers l'intérieur (11) du siège d'appui (10).

9. Roue libre selon l'une quelconque des revendications 1 à 8, **caractérisée en ce que** la face conique intérieure (20) de la partie extérieure (2) fait partie d'une bague conique séparée (15), qui peut être couplée à la partie extérieure (2) par une fermeture de type baïonnette (13, 14, 16) ou par des assemblages encliquetés, collés ou soudés par friction.

10. Roue libre selon l'une quelconque des revendications 1 à 9, **caractérisée en ce que** la partie extérieure (2) est montée sur la partie intérieure (25) de façon rotative au moyen d'un palier à roulement (6) formé par un roulement à rouleaux, et **en ce que** la partie intérieure (25) présente un alésage de passage 30, avec lequel la partie intérieure (25) peut être montée de façon calée en rotation sur un arbre d'entraînement à entraîner.
